# FASCICULE DE BREVET EUROPEEN

(11) **EP 1 701 019 B1**
(45) Date de publication et mention de la délivrance du brevet: **06.04.2011**
(21) Numéro de dépôt: 06101476.7
(22) Date de dépôt: 09.02.2006
(51) Int. Cl.: F02C 7/32, F02C 7/36

(54) **Turbomoteur à double corps avec des moyens de prise de mouvement sur les rotors basse pression et haute pression, module de prise de mouvement pour le turbomoteur et procédé de montage du turbomoteur**
Zweiwellenturbomaschine mit Antriebsmodul auf Niederdruck- und Hochdruckrotoren, Antriebsmodul für die Turbomaschine und Montageverfahren der Turbomaschine
Two-spool turbomachine with driving module on low pressure and high pressure rotors, driving module for the turbomachine and turbomachine assembly method

(30) Priorité: 11.02.2005 FR 0550412
(43) Date de publication de la demande: 13.09.2006
(73) Titulaire: SNECMA, 75015 Paris (FR)
(72) Inventeur: Bart, Jacques, René, 91370 Verrières le Buisson (FR); Beutin, Bruno, Albert, 91000 Evry (FR); Morel, Patrick, Charles, Georges, 77590 Chartrettes (FR)
(74) Mandataire: David, Daniel

(56) Documents cités:
- EP-A- 1 255 023
- EP-A- 1 574 688
- US-A- 4 566 269
- US-A- 4 776 163
- US-A- 6 058 791

## Description

L'invention concerne un turbomoteur à double corps avec des moyens de prise de mouvement sur les rotors basse pression et haute pression et un procédé de montage du turbomoteur.

Une partie de la puissance générée par un turbomoteur aéronautique est utilisée pour alimenter différents organes, à la fois du turbomoteur mais aussi de l'aéronef dont le turbomoteur participe à la propulsion.

Une partie de cette puissance est actuellement prélevée au niveau du compresseur haute pression (HP), dont l'air comprimé est utilisé, notamment pour assurer la pressurisation et le conditionnement de la cabine de l'aéronef, ou encore le dégivrage. Une autre partie de cette puissance est prélevée mécaniquement sur l'arbre de l'étage HP du turbomoteur, pour entraîner l'arbre d'entrée d'un boîtier d'accessoires placé sur un carter du turbomoteur. Cet arbre d'entrée est entraîné en rotation par un arbre de transmission s'étendant dans un bras structural du carter et lui-même entraîné par un pignon solidaire de l'arbre HP.

Le boîtier d'accessoires, bien connu de l'homme du métier sous sa dénomination anglaise "Accessory Gear Box" (AGB), comporte différentes machines, ou accessoires, par exemple un générateur, un starter, un alternateur, des pompes hydraulique, à carburant ou à huile, ... Ces divers accessoires sont entraînés mécaniquement par l'arbre HP.

La tendance actuelle vise à augmenter la part du prélèvement de puissance mécanique en raison du rôle croissant des moyens électriques, réputés plus souples d'emploi.

Cependant, un prélèvement de puissance mécanique trop élevé a un effet négatif sur le fonctionnement du corps HP, car il est susceptible de provoquer le pompage du compresseur, en particulier quand le moteur fonctionne à bas régime.

L'art antérieur enseigne de prélever une partie de la puissance mécanique sur le corps basse pression (BP). Diverses solutions sont envisagées. Le document FR 2, 606, 077 propose de relier directement les rotors du turbomoteur aux deux entrées d'un différentiel placé à leur proximité. Un tel agencement n'est toutefois pas toujours possible, du fait de l'encombrement que ce placement entraîne dans le coeur du turboréacteur. Le document GB 973, 388 décrit, pour une turbine industrielle, l'entraînement du boîtier d'accessoires, situé sur le carter extérieur de la turbine, par des prises de mouvement sur l'arbre HP et l'arbre BP ; toutefois, les prises de mouvement sur chacun des arbres sont reliées au boîtier d'accessoires par des engrenages volumineux. Cela n'est pas possible dans un turbomoteur moderne dans lequel ces engrenages doivent passer par les bras structuraux du carter.

La demanderesse a déposé la demande de brevet français n° FR 03 14 429 concernant un turbomoteur à double corps dont le boîtier d'accessoires est entraîné par les arbres BP et HP, reliés à des arbres de transmission, passant chacun dans un bras structural et connectés aux deux entrées d'un différentiel relié en sortie à l'arbre d'entraînement du boîtier d'accessoires. Si une telle solution est avantageuse à de multiples égards, il est cependant parfois nécessaire de ne pas encombrer deux bras structuraux, afin de laisser le plus d'espace possible pour le passage des servitudes. Les servitudes s'entendent de canalisations de transport de fluide ou de câbles électriques d'acheminement d'énergie ou d'information (sonde de vitesse par exemple).

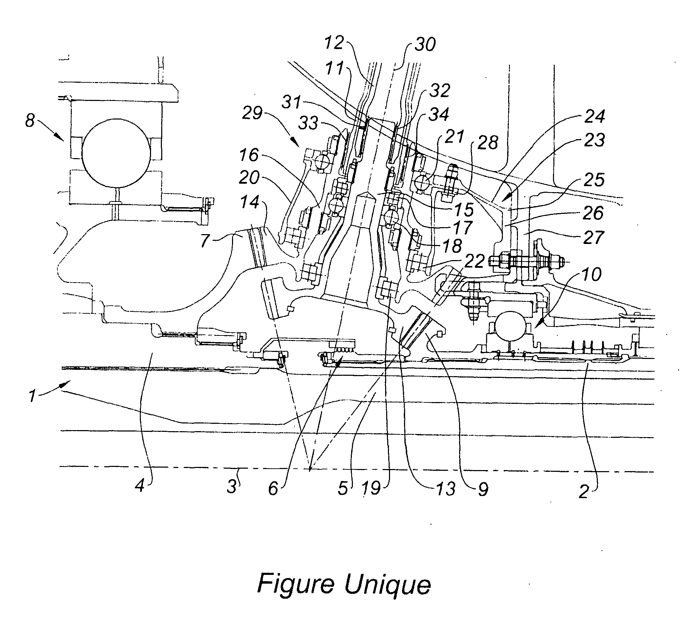

Le document US 4, 776, 163 décrit un turboréacteur avec les caractéristiques énoncées dans le préamble de la revendication 1, dans lequel les arbres HP et BP peuvent alternativement entraîner le boîtier d'accessoires, auquel ils sont reliés par des arbres de transmission de mouvement coaxiaux. Du fait de leur coaxialité, ces arbres peuvent s'étendre dans un bras structural commun. Toutefois, comme on le voit sur la figure de ce document, la prise de mouvement sur les rotors en extrémité des arbres est très volumineuse et requiert un espace conséquent sur une zone étendue des arbres.

Les turbomoteurs modernes ne ménagent pas un tel espace pour la prise de mouvement sur les rotors au niveau de l'extrémité des arbres de transmission de mouvement. Par ailleurs, les turbomoteurs actuels sont agencés pour une prise de mouvement sur le rotor HP uniquement et il serait souhaitable de proposer un dispositif de prise et de transmission du mouvement des rotors BP et HP, qui puisse être mis en place sans changement important de la structure du turbomoteur. Il est en outre nécessaire de respecter, pour les pignons solidaires des rotors sur lesquels la prise de mouvement est effectuée, des diamètres maximaux, définis à partir de la vitesse périphérique des pignons maximale acceptable pour que l'engrenage se fasse avec un glissement défini. Par exemple, la vitesse maximale autorisée en périphérie du pignon de prise de mouvement du rotor peut être de l'ordre de 160 à 170 m/sec. Il est de plus souhaitable de mettre en place un dispositif de prise et de transmission de mouvement d'encombrement et de masse faibles.

C'est ainsi que l'invention concerne un turbomoteur à double corps, comportant un rotor haute pression et un rotor basse pression, au moins un boîtier d'accessoires, un moyen d'entraînement, entraînant des arbres coaxiaux de transmission de mouvement vers le boîtier d'accessoires, le moyen d'entraînement comportant un pignon d'entraînement haute pression, solidaire du rotor haute pression à proximité de son extrémité amont, un pignon d'entraînement basse pression, solidaire du rotor basse pression en amont du rotor haute pression, caractérisé par le fait qu'il comporte un module de prise de mouvement, directement engrené avec les pignons d'entraînement, entraînant les arbres de transmission de mouvement.

Grâce à l'invention, les arbres de transmission de mouvement s'étendent coaxialement l'un à l'autre et passent donc par un seul bras. L'utilisation d'un module de prise de mouvement permet de simplifier le mécanisme, qui peut être aisément mis en place sur un turboréacteur auparavant agencé pour une prise de mouvement sur l'arbre HP, en ajoutant simplement un pignon sur l'arbre BP, le module de prise de mouvement et les arbres coaxiaux de prise de mouvement. Un module est par ailleurs, par définition, préalablement monté avant d'être directement agencé, ainsi monté, sur le turbomoteur, ce qui simplifie le montage de ce dernier.

L'invention concerne en outre un procédé de montage d'un turbomoteur tel que présenté ci-dessus, comportant les étapes consistant à :
- monter le rotor haute pression ;
- monter le module de prise de mouvement ;
- emmancher les arbres de transmission dans le module de prise de mouvement et
- monter le rotor basse pression.

L'invention sera mieux comprise à l'aide de la description suivante de sa forme de réalisation préférée, en référence à la figure unique annexée, représentant une vue en coupe schématique de la zone de prise de mouvement du turbomoteur de l'invention.

Le turbomoteur de l'invention est un turbomoteur à double corps, comportant un rotor basse pression (BP) 1 et un rotor haute pression (HP) 2, montés rotatifs autour de l'axe 3 du turbomoteur. Ce type de turbomoteur est bien connu de l'homme du métier. Il peut s'agir d'un turboréacteur ou d'un turbopropulseur, par exemple. Il s'agit en fait de tout turbomoteur comportant un compresseur et une turbine, double corps, avec un corps basse pression et un corps haute pression. Par interne ou externe, ou intérieur ou extérieur, on entendra, dans la description, interne ou externe, ou intérieur ou extérieur, au turbomoteur, radialement, par rapport à son axe 3.

Plus précisément, le turbomoteur comporte fonctionnellement, d'amont en aval dans le sens d'écoulement des gaz, une soufflante, un compresseur, une chambre de combustion, une turbine et une tuyère d'éjection. Comme il est à double corps, il comporte un compresseur BP, en amont d'un compresseur HP, et une turbine HP, en amont d'une turbine BP. Le rotor de la soufflante est solidaire de l'arbre 4 du compresseur BP, lui-même rendu solidaire de l'arbre 5 de la turbine BP. Le rotor BP 1 comporte donc ces trois éléments solidaires. L'arbre 5 de la turbine BP s'étend coaxialement à l'intérieur du rotor HP 2, qui est l'arbre du compresseur HP et de la turbine HP, solidaires. L'extrémité aval de l'arbre 4 du compresseur BP, solidaire de l'arbre 5 de la turbine BP, se situe juste en amont de l'extrémité amont du rotor HP 2. L'arbre 4 du compresseur BP est fixé coaxialement à l'extérieur de l'arbre 5 de la turbine BP. Un joint d'étanchéité 6 est prévu entre l'extrémité aval de l'arbre 4 du compresseur BP et l'extrémité amont du rotor HP 2, afin d'assurer l'étanchéité entre la zone qui se situe à l'extérieur, baignée dans un brouillard d'huile de lubrification, et la zone qui se situe à l'intérieur, où circule principalement de l'air.

L'arbre 4 du compresseur BP comporte, à proximité de son extrémité aval, un pignon 7 d'entraînement, que l'on nommera pignon d'entraînement BP 7. Ce pignon d'entraînement BP 7 se situe en aval du palier aval 8 de l'arbre 4 du compresseur BP. Le rotor HP 2 comporte, à proximité de son extrémité amont, un pignon 9 d'entraînement, que l'on nommera pignon d'entraînement HP 9. Ce pignon d'entraînement HP 9 se situe en amont du palier amont 10 du rotor HP 2. Le diamètre du pignon d'entraînement BP 7 est supérieur au diamètre du pignon d'entraînement HP 9.

Le turbomoteur comporte un arbre 11 de transmission du mouvement de l'arbre BP, que l'on nommera arbre de transmission BP 11, et un arbre 12 de transmission du mouvement de l'arbre HP, que l'on nommera arbre de transmission HP 12.

Les arbres de transmission BP 11 et HP 12 sont entraînés en rotation par un module 29 de prise de mouvement sur les pignons d'entraînement BP 7 et HP 9.

L'arbre de transmission HP 12 est connecté et solidaire, à son extrémité interne, à un pignon 13 de prise de mouvement du module de prise de mouvement 29, que l'on nommera pignon de prise de mouvement HP 13, agencé pour engrener avec le pignon d'entraînement HP 9. L'arbre de transmission BP 11 est connecté et solidaire, à son extrémité interne, à un pignon 14 de prise de mouvement du module de prise de mouvement 29, que l'on nommera pignon de prise de mouvement BP 14, agencé pour engrener avec le pignon d'entraînement BP 7. Le pignon de prise de mouvement BP 14 est coaxial au pignon de prise de mouvement HP 13, de diamètre supérieur à ce dernier et situé du côté externe par rapport à lui.

Chacun des pignons de prise de mouvement HP 13 et BP 14 est solidaire d'une pièce d'extrémité 15, 16, respectivement, du module de prise de mouvement 29, connectée à l'arbre HP 12, BP 11 correspondant, dont elle est solidaire. Chaque pièce d'extrémité 15, 16 comprend, de l'extérieur vers l'intérieur, une portion cylindrique et une portion tronconique, dont le diamètre augmente vers l'intérieur. Le pignon de prise de mouvement HP 13 ou BP 14 correspondant s'étend à l'extrémité interne de la portion tronconique et est ici formé d'une seule pièce avec la pièce d'extrémité 15, 16 le supportant.

Entre les pièces d'extrémité 15, 16 est monté un ensemble de paliers, permettant la rotation de ces pièces 15, 16, et donc des arbres de transmission 12, 11, l'une par rapport à l'autre, de manière co-rotative ou contrarotative selon le mode de rotation des rotors HP 2 et BP 1. Cet ensemble de paliers comprend ici, de l'extérieur vers l'intérieur, un premier palier à rouleaux 17, un palier à billes 18, remplissant également une fonction de positionnement axial des pièces d'extrémité 15, 16 l'une par rapport à l'autre, et un deuxième palier à rouleaux 19, placé à l'extrémité interne de la pièce d'extrémité 16 de l'arbre de transmission BP 11.

La portion externe des pièces d'extrémité 15, 16, à savoir la portion de ces pièces située du côté externe par rapport aux pignons de prise de mouvement 13, 14, est enveloppée et maintenue dans un boîtier 20 du module de prise de mouvement 29 du turbomoteur, que l'on nommera boîtier 20. Ce boîtier 20 est de forme tubulaire et s'étend co-axialement aux pièces d'extrémité 15, 16 et donc aux arbres de transmission HP 12 et BP 11 ; il est plus précisément de forme globalement tronconique, son diamètre augmentant vers l'intérieur afin de s'adapter à la forme des pièces d'extrémité 15, 16. Entre la pièce d'extrémité 16 de l'arbre de transmission BP 11 et le boîtier 20, sont agencés deux paliers, un palier à billes 21 situé vers l'extrémité externe du boîtier 20 et remplissant également une fonction de positionnement axial de la pièce d'extrémité 16 par rapport au boîtier 20, et un palier à rouleaux 22 situé vers l'extrémité interne du boîtier 20.

Le boîtier 20 est fixé à la structure fixe du turbomoteur par une portion de flasque 23, présentant une portion amont 24 épousant la forme externe amont du boîtier 20, s'étendant vers l'aval et présentant un coude 25 à partir duquel elle présente une portion 26 s'étendant transversalement à l'axe 3 du turbomoteur, laquelle portion 26 est fixée, ici à l'aide de vis, à une bride 27 de la structure fixe du turbomoteur. La portion amont 24 est fixée à une bride 28 en saillie hors du boîtier 20, de son côté aval, ici à l'aide de vis.

Ainsi, les arbres de transmission BP 11 et HP 12 sont maintenus, par l'intermédiaire du boîtier 20, solidaires de la structure fixe du turboréacteur, les pièces d'extrémité 16, 15 du module de prise de mouvement étant par ailleurs protégées. Ils sont libres de tourner sur leur axe.

Le montage du module 29 de prise de mouvement de l'invention et son fonctionnement vont maintenant être expliqués plus en détails. Le module 29 de prise de mouvement comprend les pignons de prise de mouvement HP 13 et BP 14, les pièces d'extrémité correspondantes 15, 16 et le boîtier 20, ainsi que les paliers 17, 18, 19, 21, 22 correspondant.

On peut noter d'emblée que la structure globale d'un turbomoteur, sur lequel il était prévu d'agencer un dispositif de prise de mouvement sur l'arbre HP à un emplacement longitudinal semblable à celui de l'invention, n'est que peu changée par la mise en place du moyen d'entraînement des arbres de transmission de mouvement 11, 12 de l'invention, dans la mesure où il suffit d'ajouter un pignon d'entraînement 7 sur le rotor BP 1, le module de prise de mouvement 29 et de prévoir les deux arbres coaxiaux de transmission de mouvement 11, 12. L'ensemble étant compact, son encombrement est limité. Le moyen d'entraînement des arbres de transmission de mouvement 11, 12 s'entend des pignons d'entraînement BP 7 et HP 9 de l'arbre 4 du compresseur BP et de l'arbre 5 de la turbine BP, et du module de prise de mouvement 29.

Lors du montage du turbomoteur, le rotor HP 2 est tout d'abord monté. On monte ensuite le boîtier 20 du module de prise de mouvement 29, dans lequel ont préalablement été montées les pièces d'extrémité 15, 16 des arbres de transmission 12, 11, et tous les paliers nécessaires 17, 18, 19, 21, 22, lesquelles pièces d'extrémité 15, 16 ne sont pas à ce stade du montage solidaires de leur arbre respectif 12, 11. Autrement dit, le module de prise de mouvement 29 a été préalablement monté et il est directement monté, "en bloc", sur le turbomoteur. Le boîtier 20 est fixé à la bride 27 de la structure fixe du turbomoteur. Lors du montage du module 29, le pignon de prise de mouvement HP 13 de la pièce d'extrémité 15 de l'arbre de transmission HP 12 vient engrener avec le pignon d'entraînement HP 9 du rotor HP 2.

On emmanche alors les arbres de transmission 11, 12 dans le bras structural du turbomoteur dans lequel ils sont destinés à s'étendre. Dans le cas d'espèce considéré, le turbomoteur est un turboréacteur et les arbres de transmission 11, 12 s'étendent dans un bras du carter dit intermédiaire, bien connu de l'homme du métier, qui est un carter structural, faisant partie de la structure fixe du turboréacteur, dont l'enveloppe externe s'étend dans la continuité du carter de soufflante, et auquel sont généralement reliés les mâts de fixation à l'aéronef dont le turboréacteur est destiné à participer à la propulsion. Lorsqu'ils sont emmanchés, les arbres de transmission 11, 12 viennent en prise avec leur pièce d'extrémité correspondante 16, 15, devenant de cette façon solidaire d'elle, au moins en rotation. Dans le cas d'espèce considéré, la portion externe de la pièce d'extrémité 15 de l'arbre de transmission HP 12 comporte une cannelure 31, s'étendant à sa périphérie externe, avec laquelle vient engrener une cannelure 32 de l'extrémité interne de l'arbre de transmission HP 12, qui s'étend à partir de la portion interne de cette portion d'extrémité interne tubulaire. Ces deux éléments sont ainsi solidaires en rotation. De façon similaire, la portion externe de la pièce d'extrémité 16 de l'arbre de transmission BP 11, qui est tubulaire, comporte une cannelure 33, s'étendant à partir de sa périphérie interne, avec laquelle vient engrener une cannelure 34 de l'extrémité interne de l'arbre de transmission HP 12, qui s'étend à partir de la portion externe de cette portion d'extrémité interne tubulaire. Ces deux éléments sont ainsi solidaires en rotation.

Le rotor BP 1 est ensuite emmanché dans le turbomoteur. Ce faisant, le pignon d'entraînement BP 7 de l'arbre 4 du compresseur BP vient engrener avec le pignon de prise de mouvement BP 14 de la pièce d'extrémité 16 de l'arbre de transmission BP 11.

Le module de prise de mouvement 29, les rotors BP 1 et HP 2 et les arbres de transmission BP 11 et HP 12 sont ainsi montés les uns par rapport aux autres, le moyen d'entraînement des arbres de transmission de mouvement 11,12 étant bien mis en place.

Lors du fonctionnement du turbomoteur, les rotors BP 1 et HP 2 tournent, dans le même sens ou dans un sens différent selon le mode de rotation du turbomoteur. Leurs pignons d'entraînement BP 7 et HP 9 entraînent en rotation les pignons de prise de mouvement BP 14 et HP 13 du module de prise de mouvement 29, qui entraînent en rotation les arbres de transmission BP 11 et HP 12, par le biais des pièces d'extrémité 16, 15 et des cannelures (31, 32), (33, 34). Les arbres de transmission 11, 12 sont, à leur extrémité externe, reliés à un ou plusieurs boîtiers d'acce ssoires. Ainsi, chaque arbre de transmission 11, 12 peut entraîner un boîtier d'accessoires différent, ou alors les arbres 11, 12 sont couplés afin d'entraîner un même boîtier d'accessoires. A cet effet, les arbres 11, 12 peuvent par exemple entraîner les entrées d'un engrenage différentiel, dont la sortie est reliée à l'arbre d'entraînement du boîtier d'accessoires, de manière bien connue de l'homme du métier.

On peut noter que, dans la forme de réalisation de la figure, l'axe 30 des arbres de transmission de mouvement 11, 12 ne forme pas un angle droit avec l'axe 3 du turbomoteur. Les pignons d'entraînement 7, 9 des rotors 1, 2 et les pignons de prise de mouvement 14, 13 du module de prise de mouvement 29 sont structurellement agencés en conséquence. En fonction de la forme de réalisation choisie, ces pignons sont droits, coniques ou autre, agencés par l'homme du métier pour une bonne prise de mouvement. L'angle ici formé par l'axe 30 des arbres de transmission 11, 12 est imposé par le passage de ces arbres 11, 12 dans un bras structural qui ne s'étend pas tout à fait à l'aplomb de la zone dans laquelle la prise de mouvement est effectuée qui, de nouveau, correspond à la zone dans laquelle se trouve l'extrémité amont du rotor HP 2 et l'extrémité aval de l'arbre 4 du compresseur BP.

Grâce à l'invention, les deux arbres de transmission de mouvement 11, 12 sont coaxiaux, ce qui permet de les faire passer dans un seul bras du turbomoteur. Par ailleurs, le module de prise de mouvement 29 est très simple à monter, les arbres de transmission BP 11 et HP 12 étant simplement emmanchés dans leur pièce d'extrémité respective 16, 15 pour être entraînés en rotation par les rotors BP 1 et HP 2. Le diamètre du pignon d'entraînement HP 9 du rotor HP 2 est le plus faible, afin de se conformer à la limite en vitesse périphérique admise pour les dents des pignons pour que la transmission de mouvement se fasse avec un minimum de glissement. Le diamètre plus grand du pignon d'entraînement BP 7 est autorisé par la vitesse de rotation plus faible du rotor BP 1. La compacité du module de prise de mouvement 29, et du moyen d'entraînement en général, engendre un encombrement et une masse minimisés.

## Revendications

1. Turbomoteur à double corps, comportant un rotor haute pression (2) et un rotor basse pression (1), au moins un boîtier d'accessoires, un moyen d'entraînement, entraînant des arbres coaxiaux (11, 12) de transmission de mouvement vers le boîtier d'accessoires, le moyen d'entraînement comportant un pignon d'entraînement haute pression (9), solidaire du rotor haute pression (2) à proximité de son extrémité amont, un pignon d'entraînement basse pression (7), solidaire du rotor basse pression (1) en amont du rotor haute pression (2), **caractérisé par le fait qu'**il comporte un module (29) de prise de mouvement, directement engrené avec les pignons d'entraînement, entraînant les arbres (11, 12) de transmission de mouvement.

2. Turbomoteur selon la revendication 1, dans lequel les arbres (11, 12) de transmission de mouvement sont emmanchés dans le module (29) de prise de mouvement.

3. Turbomoteur selon l'une des revendications 1 ou 2, dans lequel le module (29) de prise de mouvement comporte un pignon (13) de prise de mouvement haute pression, engrenant avec le pignon (9) d'entraînement haute pression, et un pignon (14) de prise de mouvement basse pression, coaxial au pignon (13) de prise de mouvement haute pression, engrenant avec le pignon (7) d'entraînement basse pression.

4. Turbomoteur selon la revendication 3, dans lequel les pignons (13, 14) de prise de mouvement sont solidaires de pièces d'extrémité (15, 16) contenues dans un boîtier (20) solidaire de la structure fixe du turbomoteur.

5. Turbomoteur selon la revendication 4, dans lequel les arbres (11, 12) de transmission de mouvement sont engrenés avec les pièces d'extrémité (15, 16) par des cannelures ((31, 32), (33, 34)).

6. Turbomoteur selon l'une des revendications 1 à 5, dans lequel le diamètre du pignon (9) d'entraînement haute pression est inférieur au diamètre du pignon (7) d'entraînement basse pression.

7. Turbomoteur selon l'une des revendications 1 à 6, dans lequel le pignon (9) d'entraînement haute pression est situé en amont du palier amont (10) du rotor haute pression (2) et le pignon (7) d'entraînement basse pression est situé en aval du palier aval (8) de l'arbre (4) du compresseur basse pression du rotor basse pression (1).

8. Turbomoteur selon l'une des revendications 1 à 7, qui est un turboréacteur, dans lequel les arbres de transmission s'étendent dans un bras structural du carter intermédiaire.

9. Procédé de montage d'un turbomoteur selon l'une des revendications 1 à 8, comportant les étapes consistant à :
- monter le rotor haute pression (2);
- monter le module (29) de prise de mouvement;
- emmancher les arbres (11; 12) de transmission dans le module (29) de prise de mouvement et
- monter le rotor basse pression (1).

## Claims

1. Twin spool turbine engine comprising a high-pressure rotor (2) and a low-pressure rotor (1), at least one accessory gearbox, a drive means, driving coaxial transmission shafts (11, 12) that transmit movement to the accessory gearbox, the drive means comprising a high-pressure drive pinion (9) secured to the high-pressure rotor (2) near its upstream end, a low-pressure drive pinion (7) secured to the low-pressure rotor (1) upstream of the high-pressure rotor (2), **characterized in that** it comprises a power take-off module (29) in direct mesh with the drive pinions, driving the transmission shafts (11, 12).

2. Turbine engine according to Claim 1 in which the transmission shafts (11, 12) are fitted into the power take-off module (29).

3. Turbine engine according to one of Claims 1 and 2 in which the power take-off module (29) comprises a high-pressure power take-off pinion (13) in mesh with the high-pressure drive pinion (9), and a low-pressure power take-off pinion (14) coaxial with the high-pressure power take-off pinion (13) in mesh with the low-pressure drive pinion (7).

4. Turbine engine according to Claim 3 in which the power take-off pinions (13, 14) are secured to end pieces (15, 16) contained in a box (20) secured to the fixed structure of the turbine engine.

5. Turbine engine according to Claim 4 in which the transmission shafts (11, 12) are in mesh with the end pieces (15, 16) via splines ((31, 32), (33, 34)).

6. Turbine engine according to one of Claims 1 to 5 in which the diameter of the high-pressure drive pinion (9) is smaller than the diameter of the low-pressure drive pinion (7).

7. Turbine engine according to one of Claims 1 to 6 in which the high-pressure drive pinion (9) is situated upstream of the upstream bearing (10) of the high-pressure rotor (2) and the low-pressure drive pinion (7) is situated downstream of the downstream bearing (8) of the low-pressure compressor shaft (4) of the low-pressure rotor (1).

8. Turbine engine according to one of Claims 1 to 7 which is a jet engine, in which the transmission shafts run along one structural arm of the intermediate casing.

9. Method for assembling a turbine engine according to one of Claims 1 to 8, comprising the steps consisting in:
- mounting the high-pressure rotor (2);
- mounting the power take-off module (29);
- fitting the transmission shafts (11, 12) into the power take-off module (29), and
- mounting the low-pressure rotor (1).

## Patentansprüche

1. Zweiwellen-Turbomotor, umfassend einen Hochdruckrotor (2) und einen Niederdruckrotor (1), mindestens ein Zubehörgehäuse, ein Antriebsmittel, das koaxiale Wellen (11, 12) zur Bewegungsübertragung hin zum Zubehörgehäuse antreibt, wobei das Antriebsmittel ein Hochdruck-Antriebsritzel (9), das mit dem Hochdruckrotor (2) in der Nähe seines vorgelagerten Endes fest verbunden ist, und ein Niederdruck-Antriebsritzel (7) umfasst, das mit dem Niederdruckrotor (1), dem Hochdruckrotor (2) vorgelagert, fest verbunden ist, **dadurch gekennzeichnet, dass** er ein Nebenabtriebsmodul (29) umfasst, das mit den Antriebsritzeln in direktem Eingriff steht, die die Wellen (11, 12) zur Bewegungsübertragung antreiben.

2. Turbomotor nach Anspruch 1, wobei die Wellen (11, 12) zur Bewegungsübertragung in das Nebenabtriebsmodul (29) eingesetzt sind.

3. Turbomotor nach einem der Ansprüche 1 oder 2, wobei das Nebenabtriebsmodul (29) ein Hochdruck-Nebenabtriebsritzel (13), das mit dem Hochdruck-Antriebsritzel (9) in Eingriff steht, und ein Niederdruck-Nebenabtriebsritzel (14) umfasst, das koaxial zum Hochdruck-Nebenabtriebsritzel (13) verläuft und mit dem Niederdruck-Antriebsritzel (7) in Eingriff steht.

4. Turbomotor nach Anspruch 3, wobei die Nebenabtriebsritzel (13, 14) fest mit Endteilen (15, 16) verbunden sind, die in einem Gehäuse (20) enthalten sind, das mit der feststehenden Struktur des Turbomotors fest verbunden ist.

5. Turbomotor nach Anspruch 4, wobei die Wellen (11, 12) zur Bewegungsübertragung über Rillen ((31, 32), (33, 34)) mit den Endteilen (15, 16) in Eingriff stehen.

6. Turbomotor nach einem der Ansprüche 1 bis 5, wobei der Durchmesser des Hochdruck-Antriebsritzels (9) kleiner ist als der Durchmesser des Niederdruck-Antriebsritzels (7).

7. Turbomotor nach einem der Ansprüche 1 bis 6, wobei das Hochdruck-Antriebsritzel (9) dem vorgelagerten Lager (10) des Hochdruckrotors (2) vorgelagert ist und das Niederdruck-Antriebsritzel (7) dem nachgelagerten Lager (8) der Welle (4) des Niederdruckkompressors des Niederdruckrotors (1) nachgelagert ist.

8. Turbomotor nach einem der Ansprüche 1 bis 7, der ein Turboreaktor ist, wobei sich die Wellen zur Übertragung in einem Strukturarm des Zwischengehäuses erstrecken.

9. Verfahren zur Montage eines Turbomotors nach einem der Ansprüche 1 bis 8, umfassend folgende Schritte:
- Montieren des Hochdruckrotors (2);
- Montieren des Nebenabtriebsmoduls (29);
- Einsetzen der Wellen (11, 12) zur Übertragung in das Nebenabtriebsmodul (29) und
- Montieren des Niederdruckrotors (1).
